Europäisches Patentamt

European Patent Office

Office européen des brevets

(19)

(11) **EP 1 265 395 A1**

(12) # DEMANDE DE BREVET EUROPEEN

(43) Date de publication:
**11.12.2002 Bulletin 2002/50**

(51) Int Cl.[7]: **H04L 5/02**

(21) Numéro de dépôt: **02354092.5**

(22) Date de dépôt: **05.06.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **06.06.2001 FR 0107395**

(71) Demandeur: **STMicroelectronics S.A.**
**92120 Montrouge (FR)**

(72) Inventeur: **Isson, Olivier**
**38700 La Tronche (FR)**

(74) Mandataire: **de Beaumont, Michel**
**Cabinet Michel de Beaumont**
**1, rue Champollion**
**38000 Grenoble (FR)**

(54) **Procédé et dispositif de transmission de données en MC/DCMA**

(57) L'invention concerne la transmission de données entre des noeuds d'un réseau, par multiplexage multiporteuses à répartition de codes. L'invention consiste à allouer à chaque noeud au moins une matrice d'étalement, un ensemble de données d'au moins une donnée à transmettre par un noeud (N) étant multiplié par la matrice d'étalement qui lui est associée et le produit étant ensuite transmis sur un groupe de porteuses en au moins un ensemble prédéterminé d'échantillons constituant au moins un symbole OFDM (S) ; à former des symboles à transmettre ayant tous la même durée quel que soit le noeud d'émission ; et à adjoindre à chaque symbole transmis un préfixe cyclique (PF) et un suffixe cyclique (SF) représentant un nombre prédéterminé d'échantillons, respectivement de la fin et du début du symbole.

Fig 4

EP 1 265 395 A1

**Description**

La présente invention concerne le domaine des réseaux de communication multipoints-multipoints à milieu partagé. L'invention sera décrite par la suite en relation avec un exemple d'application aux réseaux utilisant les conducteurs d'alimentation électriques (le secteur) comme support de transmission. On utilise généralement des porteuses haute fréquence qui sont modulées pour transmettre des données entre deux ou plusieurs appareils équipés de modems (modulateur-démodulateur) et raccordés au secteur. De tels réseaux peuvent être utilisés par exemple pour connecter un micro-ordinateur à ses périphériques (imprimante, numériseur, etc.). Ils peuvent également distribuer, à l'intérieur d'une habitation, d'un bureau ou analogue, des données multimédias issues d'une connexion à un accès extérieur par exemple, une antenne satellite, un câble de fibres optiques, un modem câble, un modem XDSL, etc.

Comme plusieurs dispositifs peuvent avoir besoin simultanément de transmettre des informations sur le réseau partagé, un mécanisme de contrôle d'accès du moyen de transmission (MAC) est nécessaire pour éviter des collisions qui conduiraient à des pertes d'informations. De plus, comme différents services multimédias ou types de transmission sont susceptibles d'utiliser des mêmes conducteurs d'alimentation électrique et que ces différentes transmissions ont le plus souvent des contraintes distinctes en termes de retard, de taux d'erreur de bit etc., on a généralement recours à un mécanisme de gestion de priorité d'accès désigné plus généralement par contrôle de la qualité du service (QOS).

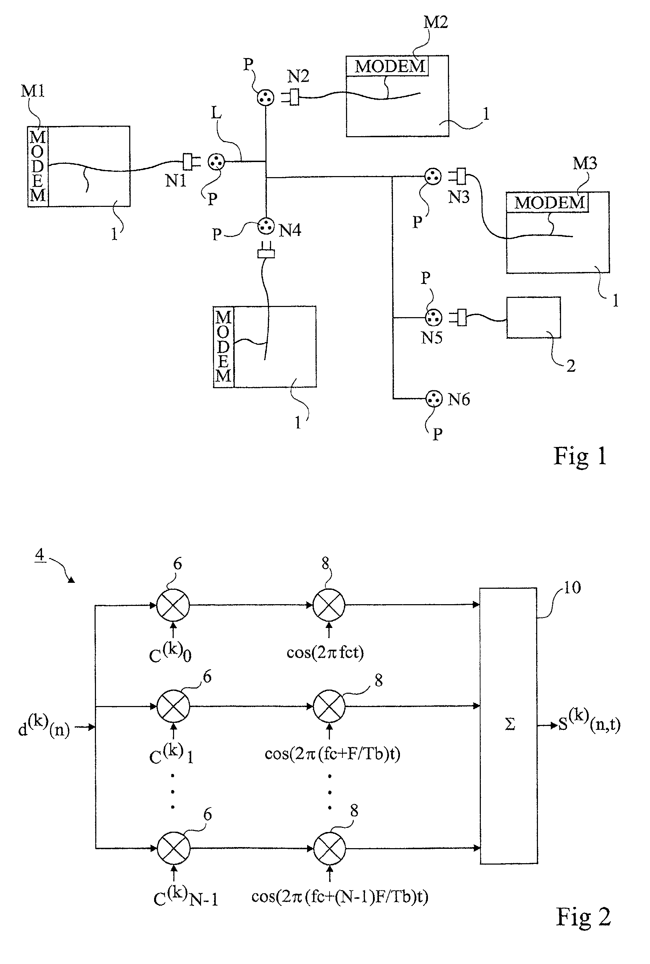

La figure 1 représente, de façon très schématique, un exemple d'architecture d'un réseau de transmission utilisant des conducteurs L d'alimentation électrique comme support de transmission. Le réseau de distribution électrique relie différentes prises P entre elles, le cas échéant par l'intermédiaire d'un tableau de répartition d'alimentation électrique pourvu de disjoncteurs ou analogues (non représentés). Les prises P ont été symbolisées en figure 1 comme étant des prises à trois conducteurs (phase, neutre et terre). Toutefois, il pourra s'agir également de prises ne disposant que de deux conducteurs (phase et neutre). Du point de vue du réseau de transmission, chaque prise est considérée comme un noeud. Six noeuds N1, N2, N3, N4, N5 et N6 sont représentés en figure 1.

Parmi les divers appareils électriques connectés au réseau, des appareils 1 d'un premier type, équipés d'un modem Mk (k étant dans l'exemple illustré compris entre 1 et 4), sont respectivement connectés aux noeuds Nk pour communiquer sur le réseau. Dans l'exemple de la figure 1, un appareil 2 sans modem est raccordé sur l'une des prises. Cet appareil 2 se contente d'être alimenté par le réseau électrique.

Le plus souvent, chaque appareil 1 du premier type connecté à n'importe quelle prise du point de vue de l'alimentation électrique (noeud du point de vue du réseau) doit pouvoir envoyer et recevoir des données. Le réseau est par conséquent un réseau dit point-multipoints ou multipoints-multipoints.

Les protocoles de transmission de données sur des réseaux partagés peuvent être regroupés en trois grandes catégories. Une première catégorie concerne les accès multiples par division du temps (TDMA ou TDD) qui allouent des créneaux temporels différents à chaque transmission. Une deuxième catégorie concerne les accès multiples par division de fréquences (FDMA ou FDD) qui allouent une ou plusieurs fréquences à chaque transmission. Une troisième catégorie concerne les accès multiples par répartition de codes (CDMA) et par répartition de codes multiporteuses (MC-CDMA), qui allouent pour chaque transmission des codes différents, également appelés séquences ou matrices d'étalement.

Tous ces systèmes de transmission sont généralement utilisés dans des systèmes multipoints à point comme, par exemple, les systèmes de communication de téléphonies mobiles GSM. Toutefois, ils présentent tous des inconvénients dans les systèmes de communication point-multipoints ou multipoints-multipoints auxquels s'applique la présente invention.

Pour les transmissions par division du temps, on doit prévoir des temps morts importants entre chaque séquence de données envoyée par chaque dispositif. Ces temps morts doivent être insérés pour éviter les collisions entre paquets transmis par différents noeuds en tenant compte de toutes les réflexions et de tous les multitrajets possibles entre l'émetteur et le récepteur. Cet inconvénient nuit fortement à la capacité du réseau en terme de débit de transmission global.

Pour les transmissions par division de fréquences, des filtres analogiques sont requis pour séparer les fréquences ou les groupes de fréquences utilisés pour les sections d'émission et de réception des modems. Cela rend le système peu flexible et peu adaptable en fréquence dans la mesure où les filtres analogiques qui sont réalisés ne peuvent pas être modifiés en fonction des besoins de capacités dynamiques ou de tout autre raison requérant de modifier les fréquences allouées. Cela représente notamment un inconvénient important dans le cas d'un réseau utilisant les conducteurs d'alimentation comme support de transmission. En effet, la fonction de transfert d'un tel réseau varie considérablement en fonction du temps (par exemple, au branchement d'un appareil électrique, qu'il soit ou non équipé d'un modem) et d'un noeud à l'autre.

Pour les transmissions par répartition de codes simples (CDMA), c'est-à-dire monoporteuse, on assiste à les limitations de débit en pratique de l'ordre de quelques centaines de kilobits par seconde (au plus, quelques mégabits par seconde) en raison de la complexité de gestion des utilisateurs multiples, qui provoque de nombreuses interférences, et des différences de niveaux du signal reçu selon les chemins à parcourir par les différents signaux. La mise en oeuvre d'un système efficace en répartition de codes requiert des moyens importants dont le coût devient vite prohibitif. De plus, la densité spectrale d'une transmission par répartition de codes s'étend sur toute la largeur de bande utilisable, ce qui rend ce type de transmission incompatible avec les exigences de compatibilité électromagnétique qui requièrent de pouvoir interdire des émissions dans certaines bandes de fréquences spécifiques.

La présente invention concerne plus particulièrement une transmission multiporteuses par répartition de codes (MC-CDMA) qui, avec les techniques actuelles, reste inadaptée aux transmissions point-multipoints ou multipoints-multipoints.

La figure 2 représente un schéma synoptique illustrant un cas simplifié de fonctionnement d'un moyen 4 de codage et de modulation MC-CDMA. Ce cas simplifié suppose l'émission d'une seule donnée $d^{(k)}(n)$, où n représente le rang temporel de la donnée dans le flux de données à transmettre, étalée sur N porteuses par le modem d'un k-ième utilisateur d'un réseau. On suppose également, à titre d'exemple et pour simplifier, que le canal de transmission est parfait (sa réponse fréquentielle est idéale). La donnée $d^{(k)}(n)$ est fournie à un nombre N de multiplicateurs 6. Chaque multiplicateur 6 est prévu pour multiplier la donnée $d^{(k)}(n)$ à un élément $c^{(k)}(m)$ d'une séquence, dite séquence d'étalement, m étant compris entre 0 et N-1. La sortie de chaque multiplicateur 6 est fournie à un modulateur 8 correspondant pour être modulée sur une porteuse à la fréquence (fc+m.F/Tb). fc est la première fréquence d'un groupe de fréquences ou porteuses de la modulation multiporteuses. F/Tb est l'espacement entre deux porteuses consécutives, F étant un entier choisi en fonction de la fréquence d'échantillonnage et de la bande de fréquences utilisée par le signal OFDM (multiplexage par division de fréquences orthogonales) et Tb étant la durée de la donnée $d^{(k)}(n)$, hors un intervalle de garde. L'ensemble des porteuses est additionné dans un additionneur 10 pour former un symbole OFDM, ou signal temporel, $S^{(k)}(n, t)$. Le symbole $S^{(k)}(n, t)$ est un signal numérique formé d'une suite d'échantillons. On notera que, dans cet exemple particulier, l'ensemble des modulateurs 8 et de l'additionneur 10 peut être mis en oeuvre par une transformée de Fourier inverse (IFFT). Les séquences d'étalement allouées aux noeuds du réseau sont choisies de manière à être orthogonales entre elles, c'est-à-dire de manière que la somme des produits des éléments de même rang de deux séquences d'étalement quelconques de noeuds différents soit nulle. Cela revient à respecter les formules 1 et 2 suivantes où 1 et p sont des entiers compris entre 1 et le nombre maximum TN de noeuds :

$$\sum_{m=0}^{N-1} c^{(1)}(m) \bullet c^{(p)}(m) = 1 \quad \text{(après normalisation)}, \qquad (1)$$

si 1 est égal à p ; et

$$\sum_{m=0}^{N-1} c^{(1)}(m) \bullet c^{(p)}(m) = 0 , \qquad (2)$$

si 1 est différent de p.

Le réseau reçoit la somme de tous les symboles $S^{(i)}(n, t)$ émis par chaque noeud i.

Pour recevoir la donnée $d^{(k)}(n)$ précédente depuis un noeud j donné du réseau, la somme des symboles présents sur le réseau est fournie à un moyen de démodulation et de décodage (non représenté). Tout d'abord, la somme des symboles est démodulée pour chaque porteuse m. On notera que la démodulation peut être mise en oeuvre par une transformée de Fourier directe (FFT). Le résultat de la démodulation pour la porteuse m est sensiblement égal à la somme :

$$\sum_{i=0}^{TN} d^{(i)}(n) \bullet c^{(i)}(m) \qquad (3)$$

des données $d^{(i)}(n)$ émises par chaque noeud i, pondérées chacune du coefficient $c^{(i)}(m)$ correspondant à la porteuse m dans la séquence d'étalement allouée au noeud i. Le résultat de chaque démodulation est ensuite multiplié par le coefficient $c^{(k)}(m)$ correspondant de la séquence d'étalement allouée au noeud k dont on souhaite recevoir les données. Les produits obtenus pour chaque porteuse m sont sommés. On obtient :

$$\sum_{m=0}^{N-1}\left(c^{(k)}(m)\bullet\sum_{i=0}^{TN}d^{(i)}(n)\bullet c^{(i)}(m)\right).\qquad(4)$$

La donnée $d^{(i)}(n)$ émise par chaque noeud i se retrouve en facteur d'un terme :

$$\sum_{m=0}^{N-1}c^{(k)}(m)\bullet c^{(i)}(m).\qquad(5)$$

En raison de l'orthogonalité des séquences d'étalement, seule la donnée $d^{(k)}(n)$ émise par le noeud k (i=k) se retrouve, dans le noeud j, en facteur d'un terme non nul.

Plus généralement, un groupe de Q données $d^{(i)}(nQ)$ à $d^{(i)}((n+1)Q-1)$ est étalé sur les N porteuses par une multiplication par une matrice d'étalement de N lignes et Q colonnes. Dans l'exemple ci-dessus (figure 2), la matrice d'étalement est d'une seule colonne (formée par le vecteur colonne $c^{(k)}(0)$, ..., $c^{(k)}(N-1)$), le tout transposé. Les coefficients de la matrice d'étalement sont donc fonctions de la communication à établir. Plus précisément, les coefficients de la matrice de décodage utilisée en réception par un modem donné doivent être fonction (par exemple égaux dans le cas de codes réels) de ceux de la matrice d'étalement utilisée en émission par le noeud dont on veut recevoir des données.

Dans une telle transmission multiporteuses, les retards de propagation des signaux sur le réseau et leurs réflexions notamment créent des interférences entre les symboles $S^{(i)}(n, t)$ émis. De telles interférences sont susceptibles de perturber ou d'empêcher la réception des signaux par les noeuds du réseau.

Les normes relatives aux réseaux utilisant le secteur d'alimentation comme support de transmission prévoient classiquement un accès multiple par division de fréquences réalisé en utilisant un multiplexage par division de fréquences orthogonales (OFDM). Par exemple, l'article "HomePlug Standard Brings Networking to the Home" de Steve Gardner, Brian Markwalter et Larry Yonge, paru en décembre 2000 dans Communication Systems Design, expose l'application d'un tel multiplexage aux réseaux utilisant les câbles d'alimentation électriques comme support de transmission. Un inconvénient notable d'un multiplexage OFDM dans un tel réseau, cependant, est que la mise en marche de certains appareils alimentés par le réseau (par exemple utilisant un moteur électrique) est susceptible de provoquer un fort bruit sur une bande de fréquences particulière. Si cette bande de fréquences particulière empiète sur une bande de fréquences allouée pour une transmission de données, cette transmission ne peut plus avoir lieu.

La présente invention vise à proposer une nouvelle technique de transmission adaptée aux réseaux utilisant le secteur d'alimentation comme support de transmission.

La présente invention vise à proposer une technique de transmission multiporteuses par répartition de codes (MC-CDMA) adaptée à de tels réseaux.

L'invention vise également à permettre que tous les modems connectés au réseau puissent fonctionner sans qu'il soit nécessaire de gérer de manière particulière l'attribution des matrices d'étalement aux noeuds du réseau.

L'invention vise en outre à supprimer les temps morts dans les transmissions.

Pour atteindre ces objets et d'autres, la présente invention prévoit un procédé de transmission de données entre des noeuds d'un réseau, par multiplexage multiporteuses à répartition de codes, consistant :

à allouer à chaque noeud au moins une matrice d'étalement, un ensemble de données d'au moins une donnée à transmettre par un noeud étant multiplié par la matrice d'étalement qui lui est associée et le produit étant ensuite transmis sur un groupe de porteuses en au moins un ensemble prédéterminé d'échantillons constituant au moins un symbole OFDM ;
à former des symboles à transmettre ayant tous la même durée, quel que soit le noeud d'émission ; et
à adjoindre à chaque symbole transmis un préfixe cyclique et un suffixe cyclique représentant un nombre prédéterminé d'échantillons, respectivement de la fin et du début du symbole.

Selon un mode de réalisation de la présente invention, les matrices d'étalement allouées aux noeuds sont différentes les unes des autres, un seul groupe de porteuses étant utilisé.

Selon un mode de réalisation de la présente invention, les matrices d'étalement allouées à deux noeuds communiquant entre eux sont identiques.

Selon un mode de réalisation de la présente invention, deux groupes différents de porteuses sont respectivement utilisés pour l'émission des données depuis chacun desdits deux noeuds.

Selon un mode de réalisation de la présente invention, un seul groupe de porteuses est utilisé pour l'émission et la réception des données d'un même noeud, un signal dépendant des données émises par un noeud donné étant soustrait aux données reçues par ce même noeud.

Selon un mode de réalisation de la présente invention, ledit signal dépendant des données émises est une estimation de la réflexion, vers un noeud donné, des données que ce noeud émet sur le réseau.

Selon un mode de réalisation de la présente invention, on synchronise les instants de début de transmission des symboles depuis tous les noeuds.

Selon un mode de réalisation de la présente invention, on met en forme les symboles à transmettre de façon à éviter des interférences inter-porteuses.

L'invention prévoit également un dispositif de transmission de données par multiplexage multiporteuses à répartition de codes, destiné à être relié à un noeud d'un réseau, comprenant :

des moyens pour multiplier un ensemble de données à transmettre d'au moins une donnée depuis ledit noeud par une matrice d'étalement, puis à transmettre le produit sur un groupe de porteuses en un ensemble prédéterminé d'échantillons, ou symbole ; et
des moyens pour adjoindre à chaque symbole transmis un préfixe cyclique et un suffixe cyclique représentant un nombre prédéterminé d'échantillons, respectivement de la fin et du début du symbole.

L'invention prévoit également un dispositif destiné à être relié à un premier noeud d'un réseau pour transmettre à un deuxième noeud du réseau des données sous forme de symboles propres à un multiplexage par répartition de codes, comprenant :

des moyens pour déterminer au moins un code, distinct des codes utilisés pour la communication entre d'autres couples de noeuds du réseau, des moyens pour émettre des données vers le deuxième noeud en utilisant un premier groupe de fréquences, et des moyens pour recevoir les données émises du deuxième noeud vers le premier noeud en utilisant un second groupe de fréquences ;
des moyens pour adjoindre à chaque symbole transmis un préfixe cyclique et un suffixe cyclique représentant un nombre prédéterminé d'échantillons, respectivement de la fin et du début du symbole ; et
des moyens pour synchroniser les instants de début de transmission des symboles depuis tous les noeuds.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, décrite précédemment représente, de façon très schématique, un réseau utilisant les lignes d'alimentation électriques comme support de transmission ;
la figure 2, décrite précédemment, illustre schématiquement le fonctionnement d'une transmission MC-CDMA ;
la figure 3 illustre, sous forme de chronogrammes, un mode de mise en oeuvre de la présente invention ; et
la figure 4 représente un modem destiné à mettre en oeuvre une variante de la présente invention.

Les mêmes éléments ont été désignés par les mêmes références aux différentes figures. Pour des raisons de clarté, seuls les éléments et les étapes du procédé qui sont utiles à la compréhension de l'invention ont été représentés aux figures et seront décrits par la suite. En particulier, les données à transmettre et leur codage éventuel n'ont pas été détaillés et ne font pas l'objet de la présente invention. Les données à transmettre et le codage éventuel de ces données ainsi que leurs protocoles de transmission dépendent des applications et l'invention pourra être mise en oeuvre quels que soient ces types de données et protocoles de transmission. De plus, les mécanismes de contrôle d'accès et autres mécanismes nécessaires au fonctionnement du réseau (par exemple, gestion de priorité, etc.) n'ont pas été détaillés et ne font pas non plus l'objet de la présente invention. L'adaptation éventuelle de ces mécanismes pour la mise en oeuvre de l'invention fait appel à des techniques parfaitement connues et à la portée de l'homme du métier.

Selon l'invention, chaque noeud du réseau se voit allouer une matrice d'étalement propre à une transmission MC-CDMA. La matrice d'étalement d'au moins une colonne est utilisée pour coder les données émises. La réception des données émises depuis un noeud se fait en utilisant la matrice d'étalement allouée à ce noeud. Les allocations de matrices d'étalement sont gérées par le mécanisme de contrôle d'accès du réseau.

Une caractéristique de la présente invention est de prévoir un préfixe et un suffixe cycliques pour chaque symbole OFDM transmis. Cela revient, dans le domaine temporel et à l'émission de chaque symbole, à reproduire un nombre prédéterminé d'échantillons, respectivement de la fin et du début du symbole et à insérer ces reproductions au début et à la fin du symbole pour remplir les intervalles inter-symboles. Le nombre d'échantillons reproduits (ou la durée des préfixes et suffixes) est le même pour tous les noeuds, mais les préfixes peuvent avoir des durées différentes de celles des suffixes.

Le préfixe cyclique de chaque symbole revient, dans le domaine temporel, à prévoir une réplique des quelques dernières micro-secondes du symbole que l'on recopie avant le symbole, dans le temps mort séparant deux symboles. Le rôle du préfixe cyclique est d'absorber les interférences inter-symboles qui viennent du fait que le retard d'un canal n'est pas constant avec la fréquence (c'est-à-dire réponse impulsionnelle du canal de transmission).

Le recours à un préfixe cyclique, appliqué aux symboles d'un multiplexage par division de fréquences orthogonales (OFDM) dans un réseau utilisant le secteur comme support de transmission, est connu de l'article "HomePlug Standard Brings Networking to the Home" susmentionné.

Le préfixe et le suffixe prévus par l'invention servent à supprimer les interférences dues aux délais introduits par le réseau entre les données émises par les multiples utilisateurs du réseau. En effet, en répétant une partie des données en début et en fin de symbole, on évite les discontinuités en réception de différents symboles reçus simultanément par différents noeuds. De telles discontinuités se traduisent, côté réception lors de la transformée de Fourier directe, par du bruit s'étendant sur les fréquences adjacentes. Ce bruit modifie le résultat de la transformée de Fourier directe et dégrade l'orthogonalité introduite entre les données des différents utilisateurs par les matrices d'étalement. Comme, selon l'invention, les temps morts entre symboles sont remplis dans le domaine temporel par les données répétées et que le fonctionnement d'une transformée de Fourier directe est cyclique, le point de départ de prise en compte d'un symbole peut varier à l'intérieur de l'intervalle contenant le signal, c'est-à-dire la durée du symbole plus les préfixes et suffixes, sans qu'aucune information soit perdue. Cela revient à dire que les données codées obtenues par transformée de Fourier directe des symboles ayant un préfixe et un suffixe restent orthogonales entre elles. L'orthogonalité est conservée car chaque fenêtre temporelle choisie par un utilisateur en réception ne contient que des symboles OFDM de même rang temporel (pourvu que les extensions cycliques, c'est-à-dire préfixe et suffixe, couvrent toutes les réflexions et tous les trajets). Par conséquent, chaque perturbation (symbole que l'on ne veut pas recevoir sur un modem donné) n'est présente qu'une fois dans la fenêtre. Le fait de prévoir à la fois un préfixe et un suffixe permet donc à un modem récepteur de recevoir sans interférences les données émises avec une matrice d'étalement particulière.

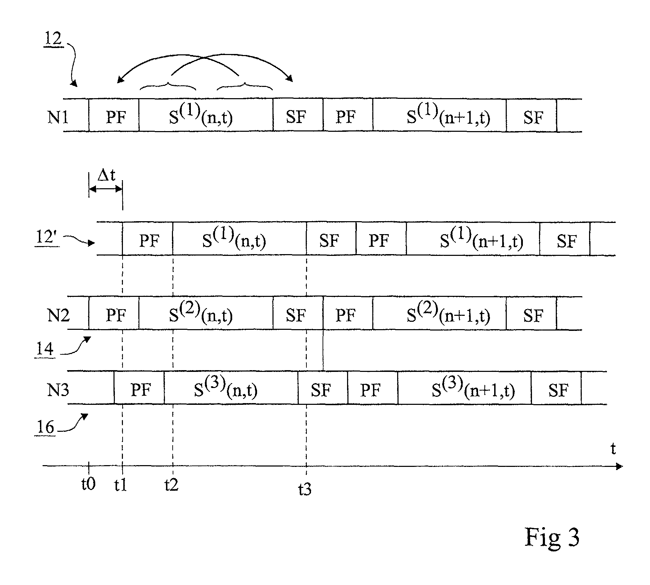

La figure 3 illustre, par des chronogrammes schématiques, un mode de mise en oeuvre de la présente invention.

On suppose un flux 12 de transmission de données, émis depuis le noeud N1 à un instant t0. Ce flux contient successivement des symboles $S^{(1)}(n, t)$, $S^{(1)}(n+1, t)$. Chaque symbole est séparé du symbole précédent ou suivant par un segment dans lequel est recopiée une partie de chacun des symboles voisins. En pratique et selon la présente invention, chaque symbole est précédé par un préfixe PF reproduisant un intervalle de temps correspondant à la fin du symbole, et est suivi d'un suffixe SF correspondant à une recopie du début du symbole.

On veut recevoir les données émises par le noeud N1 au niveau du noeud N2 du réseau. Le flux 12 subit, par exemple, un retard $\Delta t$ avant d'atteindre le noeud N2 à un instant t1 sous la forme d'un flux 12'. Dans le domaine temporel, d'autres flux interfèrent sur le noeud N2. Ces interférences peuvent provenir d'autres trajets empruntés par le flux émis 12 qui sont éliminés de façon classique par égalisation.

D'autres interférences sont constituées par les flux de symboles émis par d'autres noeuds du réseau. Dans l'exemple de la figure 2, on a représenté deux flux 14 et 16 correspondant respectivement aux émissions des noeuds N2 et N3. La structure de chaque flux de données est la même que celle exposée pour le flux 12, et comprend à chaque fois un préfixe PF et un suffixe SF associés à chaque symbole. Bien sûr, des réflexions multiples du flux 14 parviennent également au noeud N2 de même que des interférences multitrajets depuis le noeud N3.

Les matrices d'étalement avec lesquelles ont été produits les flux 14 et 16 sont différentes entre elles et différentes de la matrice d'étalement avec laquelle a été produit le flux 12. Par conséquent, côté noeud N2, on peut réceptionner sans difficultés les données codées au moyen d'une matrice de décodage fonction de la matrice d'étalement du noeud N1. La fenêtre de réception est comprise entre des instants t2 et t3 entre lesquels seuls les symboles de même rang (n) sont présents. L'intervalle de temps t2-t3 correspond à la fenêtre de réception du noeud N2 pour recevoir des données provenant du noeud N1. La détermination de la fenêtre se fait dans une phase classique d'initialisation (synchronisation temporelle) au début de chaque communication et peut être adaptée (recalée) en cours de communication.

On notera que, une fois repassé en domaine fréquentiel (après la transformée de Fourier directe), le fait que les données modulées récupérées proviennent du symbole ou du suffixe SF n'a plus aucune importance.

Un avantage notable de la présente invention est que les données émises par chaque noeud sont codées sur l'ensemble des porteuses disponibles sur le réseau. De la sorte, l'introduction d'un bruit élevé sur une bande de fréquences seulement (par exemple, consécutive à la mise en marche d'un appareil alimenté par le réseau) provoque un faible bruit sur l'ensemble des données émises par chaque noeud du réseau, ce qui permet d'effectuer l'ensemble des transmissions dans des conditions satisfaisantes.

Selon la présente invention, la longueur du suffixe cyclique est choisie en fonction des délais de propagation du réseau.

On notera toutefois que, pour la mise en oeuvre de l'invention, il est indispensable que tous les symboles aient la même longueur (durée Tb).

Selon un premier mode de réalisation, chaque émetteur du réseau se met à émettre dès qu'il reçoit un symbole. Dans ce cas, la durée du suffixe correspond à deux fois le temps de propagation maximal dans le réseau, en tenant compte de toutes les réflexions et de tous les trajets (multitrajets) possibles.

Selon un autre mode de réalisation préféré, correspondant à l'illustration de la figure 3, l'émission des différents modems est synchronisée de sorte que tous les modems connectés aux noeuds du réseau émettent en même temps. Dans ce cas, la durée du suffixe cyclique peut être avantageusement limitée à une fois le temps de propagation maximal du réseau, toujours en tenant compte de toutes les réflexions et de tous les multitrajets possibles.

Selon un autre mode de réalisation, on évite le recours à une synchronisation des émissions en mettant en forme les symboles à transmettre de façon à éviter, en réception sur un même noeud, les interférences inter-porteuses de plusieurs symboles émis par des noeuds différents. Une telle technique de mise en forme ("shaping") est parfaitement connue dans d'autres domaines d'application comme, par exemple, la réception de signaux vidéo ou la téléphonie et est décrite, par exemple dans l'article "Zipper VDSL: A Solution for Robust Duplex Communication over Telephone Lines" de Denis J. G. Mestdagh, Mikael R. Isaksson et Per Ödling, paru en mai 2000 dans la revue IEEE Communications Magazine, pages 90 à 96.

De façon classique, pour éviter le recours à des égaliseurs complexes en réception et éviter des interférences inter-symboles, la durée des préfixes cycliques est supérieure (au moins égale) à la réponse impulsionnelle du réseau de transmission.

La synchronisation éventuelle des noeuds du réseau peut être effectuée de façon autonome. Par exemple, on peut utiliser un canal de signalisation qui véhicule un signal de référence temporel du réseau. On suppose que tous les modems soient branchés sur des prises de raccordement secteur. A l'allumage d'un des modems, celui-ci envoie de façon permanente un signal particulier constitué de données prédéfinies, par exemple sur un jeu de fréquences de signalisation prédéfini. A la réception par un autre modem allumé, ce dernier renvoie immédiatement un signal de réponse, par exemple sur une autre fréquence de signalisation prédéfinie. Lorsque le premier modem reçoit la réponse, il peut calculer la durée qui devient alors la durée de propagation qu'il renvoie. A la réception du contenu de ce canal, le deuxième modem connaît désormais la durée à appliquer pour une transmission à ses propres signaux, de sorte que les deux modems susmentionnés sont désormais capables d'émettre des signaux en même temps.

Pendant cette phase d'initialisation, il peut se produire des collisions si un autre modem effectue la même opération que le deuxième. Ce problème peut être résolu en prévoyant des mécanismes aléatoires qui consistent, lorsqu'une collision intervient, à placer chaque noeud dans un mode d'attente pendant une durée déterminée par un générateur aléatoire. Ce générateur aléatoire autorise de nouveau le modem concerné à redémarrer certains cycles d'initialisation ultérieurement.

Afin de limiter le nombre de matrices d'étalement utilisé, il est également possible, selon une variante de la présente invention, d'allouer deux matrices d'étalement identiques à deux noeuds communiquant ensemble. Dans ce cas cependant, le modem de chacun des deux noeuds reçoit simultanément les données émises par l'autre noeud ainsi que la réflexion des données qu'il a lui-même émises, codées avec la même matrice d'étalement. Cette réflexion des données émises par le noeud lui-même peut notamment être due à une variation de l'impédance d'entrée du réseau, vue du noeud. Un tel phénomène est connu sous le nom d'écho proche.

Sans annuleur d'écho, on doit soit utiliser des fréquences différentes pour les sens montant et descendant, soit utiliser des matrices d'étalement différentes pour les sens montant et descendant, ce qui revient à, comme cela a été décrit précédemment, utiliser des matrices d'étalement différentes pour chaque noeud.

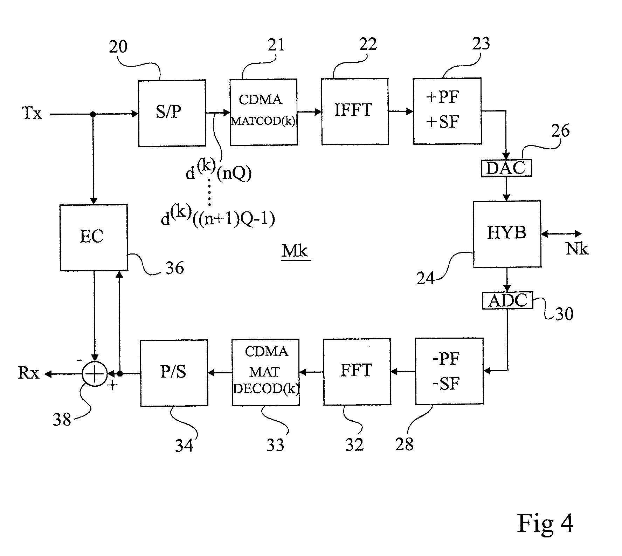

la figure 4 représente un modem Mk destiné à mettre en oeuvre une telle variante de la présente invention, disposant d'un annuleur d'écho proche. Le modem Mk, relié à un noeud Nk du réseau, comporte un moyen 20 de conversion série-parallèle (S/P) recevant en série les données Tx à émettre et produisant en sortie une série de données parallèles $d^{(k)}(nQ)$ à $d^{(k)}((n+1)Q-1))$ correspondante. La sortie du moyen 20 est reliée à un moyen de codage et de modulation 4 du type de celui décrit en généralisant la figure 2. Ce moyen est ici symbolisé sous la forme d'un bloc 21 (CDMA MATCOD(k)) de codage par la matrice d'étalement du noeud k. Les coefficients de la matrice d'étalement MATCOD(k) du noeud k à l'émission sont fixés (et le cas échéant adaptés en cours de communication) par des moyens classiques (non représentés). La sortie du bloc 21 est envoyée sur un circuit de transformée de Fourier inverse (bloc 22, IFFT). La sortie du circuit 22 est reliée à un moyen 23 d'adjonction de préfixe et de suffixe (+PF+SF). La sortie du moyen 23 est reliée à une entrée d'un hybride 24 (HYB) de séparation des données montantes/descendantes (ou entrantes/sortantes) par l'intermédiaire d'un convertisseur numérique/analogique 26 (DAC). Une borne d'entrée/sortie de l'hybride 24 est reliée au noeud Nk. Une borne de sortie de l'hybride 24 est reliée à un moyen 28 de suppression de préfixe et de suffixe (-PF-SF) par l'intermédiaire d'un convertisseur analogique/numérique 30 (ADC). La sortie du moyen 28 est reliée à un circuit 32 de transformée de Fourier directe (FFT) dont la sortie est reliée à un circuit 33 (CDMA MATDECOD(k)) de décodage par une matrice adaptée en fonction de la communication établie. Dans le mode de réalisation de la figure 4, les mêmes coefficients sont alloués aux deux noeuds communiquants. Par conséquent, les matrices de décodage des deux noeuds considérés sont fonction de la même matrice d'étalement ou de codage MATCOD(k). Plus généralement, les coefficients de la matrice de décodage sont fixés par des moyens classiques en fonction du noeud émetteur dont on souhaite recevoir les données. La sortie du moyen 33 est reliée à un moyen 34 de conversion parallèle/série (P/S). En se référant à l'exemple de la figure 2, les convertisseurs 20 et 34 n'auraient pas de raison d'être (une seule donnée).

Un annuleur d'écho proche 36 a une entrée reliée à l'entrée du moyen 20 et une entrée reliée à la sortie du moyen 34. Un soustracteur 38 est connecté de manière à soustraire une sortie de l'annuleur 36 à la sortie du moyen 34. Le soustracteur est intercalé entre le convertisseur 34 et les circuits de traitement (non représentés) des signaux démodulés reçus Rx.

Lors d'une phase d'apprentissage, alors que l'hybride 24 ne reçoit aucun symbole, un symbole d'étalonnage lui est fourni par les moyens d'émission 20, 21, 22, 23, 26. Les données produites en réponse par les moyens de réception 30, 28, 32, 33, 34 permettent à l'annuleur d'écho 36 d'évaluer la fonction de transfert qui permet d'obtenir le signal d'écho proche à partir des données fournies en entrée du moyen 20. Une fois cette fonction de transfert connue, l'annuleur d'écho est opérationnel et le modem peut fonctionner.

Le recours aux extensions cycliques permet, selon l'invention, d'utiliser un annuleur d'écho agissant sur les données (fréquentielles) en amont (émission) et en aval (réception) des transformées de Fourier. Sans ces extensions, on serait obligé de tenir compte du domaine temporel, c'est-à-dire, des informations présentes de l'autre côté des transformées de Fourier. L'invention permet donc de simplifier l'annuleur d'écho.

Bien entendu, la présente invention est susceptible de diverses variantes et modifications qui apparaîtront à l'homme de l'art. En particulier, la mise en oeuvre du procédé de transmission de l'invention est à la portée de l'homme du métier à partir des indications fonctionnelles données ci-dessus. De plus, bien que l'invention ait été décrite en relation plus particulière avec un réseau utilisant les câbles d'alimentation comme support de transmission, celle-ci pourra s'appliquer également à tout autre réseau point-multipoints ou multipoints-multipoints dans lequel des problèmes similaires se posent. A titre d'exemple, on citera les applications aux communications sans fil dans lesquelles se posent les problèmes de variation de la fonction de transfert en fonction du temps, et qui sont multitrajets et multiréflexions.

Enfin, bien que l'on ait fait parfois référence à l'utilisation de groupes de porteuses différents (par exemple en émission et en réception), cela revient en pratique à prévoir des 0 dans la matrice d'étalement pour toutes les porteuses sur lesquelles les symboles ne doivent pas être transmis, les circuits et notamment les circuits de transformées de Fourier étant, de préférence, prévus pour traiter toutes les porteuses des différents groupes éventuels. De façon générale, l'invention s'applique quel que soit le type de codage effectué, le nombre de données et le nombre de porteuses. En particulier, le nombre de porteuses peut être inférieur au nombre de coefficients par colonne des matrices d'étalement. Dans ce cas, un même ensemble de données sera transmis sur plusieurs symboles OFDM successifs.

**Revendications**

1. Procédé de transmission de données entre des noeuds d'un réseau, par multiplexage multiporteuses à répartition de codes, **caractérisé en ce qu'**il consiste :

   à allouer à chaque noeud (Ni) au moins une matrice d'étalement, un ensemble de données d'au moins une donnée (d) à transmettre par un noeud étant multiplié par la matrice d'étalement qui lui est associée et le produit étant ensuite transmis sur un groupe de porteuses en au moins un ensemble prédéterminé d'échantillons constituant au moins un symbole OFDM (S) ;
   à former des symboles à transmettre ayant tous la même durée, quel que soit le noeud d'émission ; et
   à adjoindre à chaque symbole transmis un préfixe cyclique (PF) et un suffixe cyclique (SF) représentant un nombre prédéterminé d'échantillons, respectivement de la fin et du début du symbole.

2. Procédé selon la revendication 1, dans lequel les matrices d'étalement allouées aux noeuds sont différentes les unes des autres, un seul groupe de porteuses étant utilisé.

3. Procédé selon la revendication 1, dans lequel les matrices d'étalement allouées à deux noeuds communiquant entre eux sont identiques.

4. Procédé selon la revendication 3, **caractérisé en ce que** deux groupes différents de porteuses sont respectivement utilisés pour l'émission des données depuis chacun desdits deux noeuds.

**5.** Procédé selon la revendication 3, **caractérisé en ce qu'**un seul groupe de porteuses est utilisé pour l'émission et la réception des données d'un même noeud, un signal dépendant des données émises par un noeud donné étant soustrait aux données reçues par ce même noeud.

**6.** Procédé selon la revendication 5, dans lequel ledit signal dépendant des données émises est une estimation de la réflexion, vers un noeud donné, des données que ce noeud émet sur le réseau.

**7.** Procédé selon l'une quelconque des revendications 1 à 6, **caractérisé en ce qu'**il consiste en outre à synchroniser les instants de début de transmission des symboles depuis tous les noeuds.

**8.** Procédé selon l'une quelconque des revendications 1 à 6, **caractérisé en ce qu'**il consiste en outre à mettre en forme les symboles à transmettre de façon à éviter des interférences inter-porteuses.

**9.** Dispositif (M) de transmission de données par multiplexage multiporteuses à répartition de codes, destiné à être relié à un noeud (N) d'un réseau, **caractérisé en ce qu'**il comprend :

des moyens (6, 21) pour multiplier un ensemble de données à transmettre d'au moins une donnée (d) depuis ledit noeud par une matrice d'étalement, puis à transmettre le produit sur un groupe de porteuses en un ensemble prédéterminé d'échantillons, ou symbole ; et
des moyens pour adjoindre à chaque symbole transmis un préfixe cyclique (PF) et un suffixe cyclique (SF) représentant un nombre prédéterminé d'échantillons, respectivement de la fin et du début du symbole.

**10.** Dispositif destiné à être relié à un premier noeud d'un réseau pour transmettre à un deuxième noeud du réseau des données sous forme de symboles propres à un multiplexage par répartition de codes, **caractérisé en ce qu'**il comprend :

des moyens pour déterminer au moins un code, distinct des codes utilisés pour la communication entre d'autres couples de noeuds du réseau, des moyens (20, 21, 22, 23, 26, 24) pour émettre des données vers le deuxième noeud en utilisant un premier groupe de fréquences, et des moyens (24, 30, 28, 32, 33, 34) pour recevoir les données émises du deuxième noeud vers le premier noeud en utilisant un second groupe de fréquences ;
des moyens (23) pour adjoindre à chaque symbole transmis un préfixe cyclique (PF) et un suffixe cyclique (SF) représentant un nombre prédéterminé d'échantillons, respectivement de la fin et du début du symbole ; et
des moyens pour synchroniser les instants de début de transmission des symboles depuis tous les noeuds.

Fig 1

Fig 2

12

| N1 | PF | $S^{(1)}(n,t)$ | SF | PF | $S^{(1)}(n+1,t)$ | SF | |

$\Delta t$

| 12' | | PF | $S^{(1)}(n,t)$ | SF | PF | $S^{(1)}(n+1,t)$ | SF | |

| N2 | PF | $S^{(2)}(n,t)$ | SF | PF | $S^{(2)}(n+1,t)$ | SF | |

14

| N3 | | PF | $S^{(3)}(n,t)$ | SF | PF | $S^{(3)}(n+1,t)$ | SF | |

16

t

t0  t1    t2            t3

Fig 3

Fig 4

Office européen
des brevets

**RAPPORT DE RECHERCHE EUROPEENNE**

Numéro de la demande

EP 02 35 4092

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | HARADA H ET AL: "A new multi-carrier CDMA/TDD transmission scheme based on cyclic extended spread code for 4th generation mobile communication system" PERSONAL WIRELESS COMMUNICATIONS, 17 - 19 décembre 1997, pages 319-323, XP010268070 IEEE, NEW YORK, US ISBN: 0-7803-4298-4 * page 319, colonne 2, alinéa 1 * * page 320, colonne 2, ligne 3 - ligne 7 * * page 321, colonne 2, ligne 3 - ligne 8 * * page 321, colonne 2, ligne 18 - ligne 39 * * figure 4 * * figure 5 * | 1,2,9 | H04L5/02 |
| Y | | 5,6 | |
| Y | WO 95 17046 A (BELL COMMUNICATIONS RES) 22 juin 1995 (1995-06-22) * page 4, ligne 9 - ligne 21 * * figure 3 * | 5,6 | |
| | | | DOMAINES TECHNIQUES RECHERCHES (Int.Cl.7) |
| A | WO 99 43123 A (BAHLENBERG GUNNAR ;OEDLING PER (SE); ISAKSSON MIKAEL (SE); NILSSON) 26 août 1999 (1999-08-26) * page 1, ligne 22 - ligne 26 * * page 2, ligne 5 - ligne 10 * * page 3, ligne 23 - page 4, ligne 2 * | 1-10 | H04L H04B |
| A | EP 1 085 689 A (MITSUBISHI ELECTRIC INF TECH) 21 mars 2001 (2001-03-21) * page 2, ligne 3 - ligne 11 * * page 2, ligne 33 - ligne 34 * * page 4, ligne 15 - ligne 20 * * page 4, ligne 29 - ligne 32 * | 1-4,8-10 | |

-/--

Le présent rapport a été établi pour toutes les revendications

| Lieu de la recherche | Date d'achèvement de la recherche | Examinateur |
|---|---|---|
| LA HAYE | 26 septembre 2002 | Moreno, M |

EPO FORM 1503 03.82 (P04C02)

**Office européen des brevets**

## RAPPORT DE RECHERCHE EUROPEENNE

Numéro de la demande

EP 02 35 4092

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 933 897 A (LUCENT TECHNOLOGIES INC) 4 août 1999 (1999-08-04) * page 2, ligne 38 - ligne 42 * * page 2, ligne 51 - ligne 55 * * page 5, ligne 9 - ligne 16 * | 1,9,10 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 26 septembre 2002 | Moreno, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EP 1 265 395 A1

**ANNEXE AU RAPPORT DE RECHERCHE EUROPEENNE
RELATIF A LA DEMANDE DE BREVET EUROPEEN NO.**  EP 02 35 4092

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

26-09-2002

| Document brevet cité au rapport de recherche | | Date de publication | Membre(s) de la famille de brevet(s) | | Date de publication |
|---|---|---|---|---|---|
| WO 9517046 | A | 22-06-1995 | WO | 9517046 A1 | 22-06-1995 |
| WO 9943123 | A | 26-08-1999 | SE | 514016 C2 | 11-12-2000 |
| | | | EP | 1062760 A1 | 27-12-2000 |
| | | | SE | 9801150 A | 22-08-1999 |
| | | | WO | 9943123 A1 | 26-08-1999 |
| EP 1085689 | A | 21-03-2001 | EP | 1085689 A1 | 21-03-2001 |
| | | | JP | 2001111524 A | 20-04-2001 |
| EP 0933897 | A | 04-08-1999 | EP | 0933897 A2 | 04-08-1999 |
| | | | JP | 11275046 A | 08-10-1999 |

EPO FORM P0460

Pour tout renseignement concernant cette annexe : voir Journal Officiel de l'Office européen des brevets, No.12/82

15